# EUROPEAN PATENT APPLICATION

(11) **EP 3 564 721 A1**
(43) Date of publication of application: **06.11.2019**
(21) Application number: 19172305.5
(22) Date of filing: 02.05.2019
(51) Int. Cl.: G02B 6/38

(54) **ANGLE POLISHED MULTI-FIBER CONNECTOR**

(30) Priority: 03.05.2018 US 201862666213 P; 01.05.2019 US 201916400530
(71) Applicant: Panduit Corp., Tinley Park, Illinois 60487 (US)
(72) Inventor: Pimpinella, Richard J., Frankfort, Illinois 60423 (US)
(74) Representative: Harden, Henry Simon

(57) **Abstract**

A fiber optic cable assembly includes a termination assembly attached at each of the first and second ends of an optical fiber ribbon. Each of the termination assemblies includes a ferrule having a polished contact surface that exposes ends of the optical fibers. Each contact surface forms an oblique angle relative to a plane normal to axes defined by the fibers. More specifically, each contact surface is slightly rotated clockwise or slightly rotated counter-clockwise with respect to the normal of the plane defined by the fiber array. so that when the second end of one cable assembly is mated to the first end of a second cable assembly in Key-Up to Key-Up Method B adapter configuration, the angled ferrule surfaces abut.

## Description

### PRIORITY

This application claims the benefit of U.S. Provisional Application No. 62/666,213, filed on May 3, 2018, the contents of which are incorporated herein by reference.

### FIELD OF INVENTION

The present invention relates generally to field of optical fiber connectors and more specifically to multi-fiber array connectors having an angle polished furrule designed to increase optical return loss.

### BACKGROUND

To reduce installation time and optimize optical channel performance, industry Standards such as ANSI/TIA-568-C.0, define structured cabling which comprise a system of pre-fabricated fiber components where components are 100% factory tested. Components include, cables, patch cords, cable assemblies, adapter panels, cassettes, and enclosures. This system of pre-terminated fiber components provides flexibility, scalability, and high performance while eliminating the need for field terminations or splices.

Traditionally, optical cables contain sub-units or groups of 12 fibers to provide 12, 24, 48, 72, 96, 144, and 288 fiber cables, however other fiber counts such as 8, 16, and 32 might be more efficient for supporting new and next generation optical transceivers utilizing parallel optics, where the data is transmitted over multiple fiber pairs. Although fiber counts based on 8 fibers per group (base-8) might be more adaptable to high-speed optical transceivers (≥ 40Gbps), cables with smaller fiber counts increase the required number of cassettes, enclosures, frames, and floor space. Therefore, the decision to use base-12 or base-8, must be founded on network architecture, equipment, and specific data center needs.

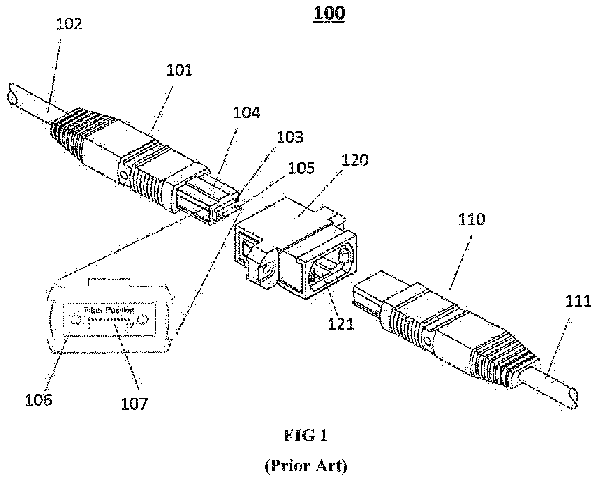

One type of optical connector designed to interconnect multiple fibers arranged in one or more rows in a single ferrule is the Multi-fiber Push On (MPO) connector illustrated in FIG. 1. The MPO connector system **100** comprises a male connector **101** having alignment pins **105,** a female connector **110,** and an adapter **120** for mating the male and female connectors **101, 110.** The polarity of the fiber array orientation is maintained by the inclusion of an alignment key **104** on each connector. The male connector **101** as shown in FIG. 1 is arranged "Key-Up," while the female connector **110** is arranged Key-Down (key not shown).

Typically, an MPO terminated optical cable **102** contains twelve individual fiber strands, each identified by a unique color in accordance with industry Standards ANSI/TIA-598-C. The fibers are inserted into through holes **107** molded in the ferrule **103** and epoxied in place. The multi-fiber ferrule endface **106** is polished in order to make physical contact with a matching set of fibers positioned in a similar ferrule contained in the female connector **110.** Alignment pins **105** provide the necessary alignment required for low loss optical coupling.

For optical channels to support network communications, the ordering of fibers in the structured cabling must maintain the "polarity" (transmit and receive) between network equipment transceiver ports. There are three methods defined in ANSI/TIA-568-C.0 (Methods A, B, and C) for maintaining the optical fiber polarity. For a structured cabling system having 12-fiber array connectors, following one array polarity method consistently will simplify cabling connections and assure all channels are correctly connected.

For array connectivity, the goal is to create an optical path from the transmit port on one device to the receive port on second device. Multi-fiber cabling however, can be used to carry signals between single channel transceivers over duplex fiber pairs, or carry parallel optical signals from multiple transmitters and receivers within a single high-speed transceiver module. Therefore, it is critically important that the ordering of the fiber pairs is maintained throughout the channel. For array connectivity following any one of these three different standardized Methods, A, B, and C, will accomplish this goal. These methods may not be interoperable and therefore, the method should be selected in advance and maintained consistently throughout the installation.

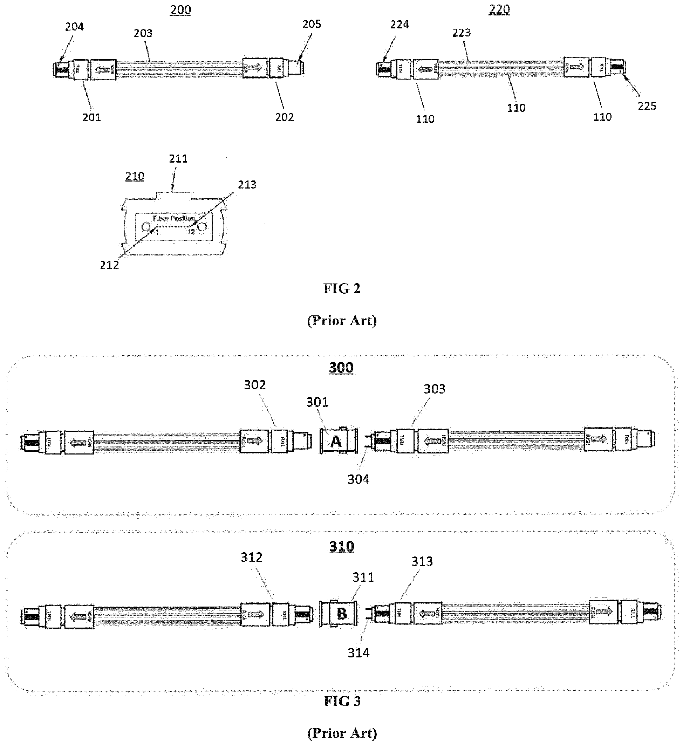

In FIG. 2, we show the Standardized cable connector combinations for Methods A **200** and B **220** for 12-fiber pre-terminated MPO cable assemblies. For clarity, fiber position #1, **212,** is labeled on each MPO connector assembly with a black dot **204, 205, 224,** and **225.** In Method A, the same fiber **203** is located in fiber position #1 on the left side of the ferrule in each of the two connectors when looking at the ferrule end faces with the keys positioned up, labeled **204** and **205.** In Method B, the fiber **223** is located in position #1 in one of the two connector ferrules, and in position #12 in the second connector ferrule terminated on the opposite end of the cable. To maintain polarity in each of the two methods a different adapter type must be used. In Method A, the adapter **301** in FIG. 3, connects two MPO connectors **302** and **303** Key-Down to Key-Up and is designated as Type A adapter, whereas the Type B adapter **311** connects MPOs **312** and **313** Key-Up to Key-Up.

It is important to note, the alignments pins **304** and **314** are required in one of the connectors to be mated in order to provide precise alignment and low loss. The alignment pins define the connector's gender, where **303** and **313** are male MPOs and **302** and **312** are female. Typically, the MPO alignment pins are located in the optical transceivers and cable terminations behind panels. The connectors on the MPO patch cords, which are handled frequently do not typically have alignment pins. This convention leads to a following implementation on the initial build out:
- Patch cords from the transceiver to adapter panel (Equipment Cord), are unpinned (female) on both ends.
- Transitions mounted behind the panel are pinned (male).
- Cables from rack to rack are unpinned (male) on both ends.

To assure polarity is maintained throughout the channel so that transmitter output ports are connected to receiver input ports, the structured cabling convention listed in Table 1 must be followed.

**Table 1. Summary of components used for parallel fiber structured cabling**

| Connectivity Method | Array connector Cable Type | Array adapter Type | Array patch cord type |
|---|---|---|---|
| A | A | A | Must include one Type-B |
| B | B | B | Type-B |

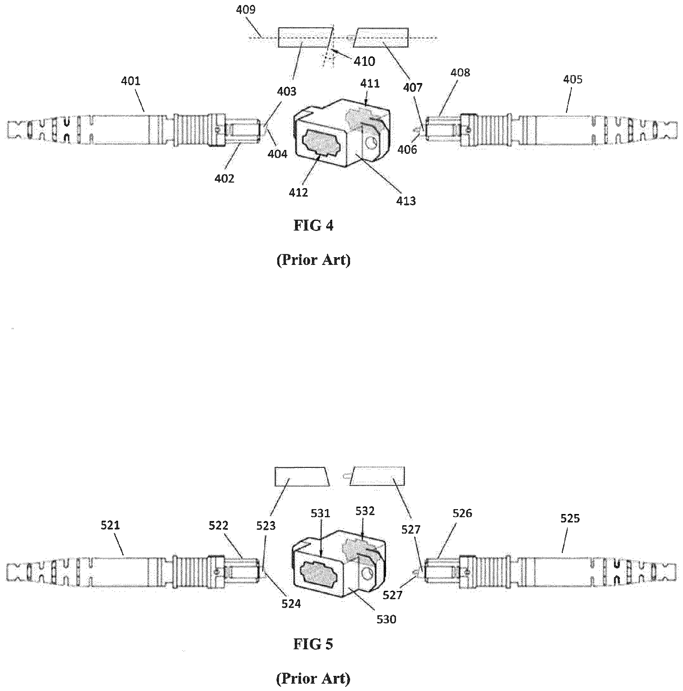

A necessary requirement for single-mode connectors is high return loss, meaning low optical reflections at mated connector interfaces. High return loss reduces multi-path interference effects which degrades channel performance. To achieve high return loss, the connectors **401** and **405** in FIG. 4 have ferrules **403, 407** which are polished with a contact angle **410** of 8 degrees wherein the surface angles away from the connector key **402,** as specified in TIA FOCIS-5 for MPO type connectors and defined as "angled down." Angled down as defined in TIA-568-C.0 is where the ferrule end face angles away from the key. An angled single-mode fiber end face redirects reflected light into an angle beyond the critical angle of the fiber core so that reflected light is radiated out of the optical return path yielding high return loss.

In FIG. 4, the connectors **401, 405** are arranged according to Method A, i.e., Key-Down **402** to Key-Up **408.** Having angled ferrules requires that mating ferrules be oppositely angled; i.e., the angled face of one of the mating ferrules must face slightly downwardly and the angled face of the other ferrule must face slightly upwardly in order for these faces to abut correctly for light transmission. In addition to the angled ferrule end face, Methods A and B have different adapters to maintain polarity and therefore impose different alignment key conventions. Consequently, it is not always possible to follow the method connectivity arrangement while still having both the conventional keyed mating and correct method type adapter. This problem is illustrated FIG. 5. Using angle ferrules in Method B structured cabling, we find that the angled ferrules **524, 527** are both Angled-Down, and consequently cannot be implemented using Method B adapters which are Key-Up **531** to Key-Up **532.**

In a proposed addendum written by committee TIA TR-42.8 regarding the TIA 569-B.3 structured cabling standard it is stated that "all connectors used in Connectivity Method B must be flat polished; angle-polished connectors cannot be connected key-up to key-up." As such, an optical structured cabling system that conforms to the connectivity requirements of Method B and meets these other configuration requirements for angled polished ferrules would be desirable for single-mode performance and polarity assurance.

### SUMMARY OF INVENTION

The present invention can enable a data communication system to meet the requirements for Connectivity Method B regarding array connectivity polarity, while still providing the performance enhancements of angle polished terminations. An embodiment of the present invention is directed to a fiber optic cable comprising: a plurality of substantially parallel optical fibers formed into a ribbon, the ribbon extending in a longitudinal direction and having first and second ends; and a termination assembly attached at each of the first and second ends of the ribbon. Each of the termination assemblies includes a body and a ferrule, the body having a key on an upper surface thereof, and the ferrule having a polished contact surface that exposes ends of the optical fibers. The contact surface forms an oblique angle with respect to the fiber axes and wherein polished contact surface is slightly rotated with respect to the normal of the plane defined by the fiber array; where: (a) the contact surfaces are rotated clockwise or (b) the contact surfaces are rotated counter-clockwise. This configuration provides aligned-key or "Key-Up to Key-Up" mating of fibers while also allowing the fibers to be angle polished.

### BRIEF DECRIPTION OF THE FIGURES

FIG. 1 shows an isometric view of an MPO connector system.
FIG. 2 illustrates the difference between a Method A and a Method B alignment system.
FIG. 3 further illustrates the difference between the Method A and Method B alignment systems.
FIG. 4 illustrates the typical angle polishing of an MPO connector.
FIG. 5 illustrates the issue with conventional angle polishing of MPO connectors in a Key-Up to Key-Up configuration.
FIG. 6 shows one embodiment of a connector system having a novel way to angle polish an MPO connector for a Key-Up to Key-Up configuration.
FIG. 7 highlights the ferrule of the connector system of FIG. 6.

### DETAILED DESCRIPTION OF THE INVENTION

The present invention will now be described more fully hereinafter, in which an examplary embodiment of the invention is shown. This invention may be embodied in different forms and should not be construed as limited to the embodiments set forth herein. Rather, this embodiment is provided so that this disclosure will be thorough and complete, and will fully convey the scope of the invention to those skilled in the art. The embodiment of the present invention is described using the MPO connector type, however, it is understood that the present invention is applicable to any multi-fiber connector type requiring an angle polished ferrule end face.

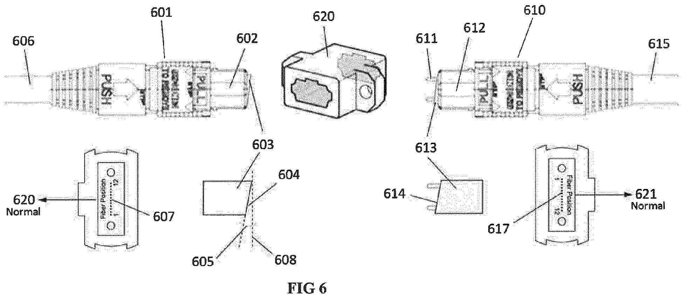

Referring to FIG. 6, fiber optic cables designated broadly as **606** and **615,** each comprise 12 optical fibers (not shown) arranged in a parallel relationship in ferrules **603** and **613** respectively to form a row of fiber positions numbered 1 through 12 as shown by **607** and **617.** where fiber position 1 is nearest the bottom edge of ferrule **603** and nearest the top edge of ferrule **613.** In Method B connectivity, ribbon fiber 1 is terminated in fiber position 1 on the first end of the cable assembly, and terminated in fiber position 12 on the second end, and utilizes Type B adapters have Key-Up to Key-Up alignment.

In accordance to the present invention, the ferrule **603** has a polished surface **604** rotated 8 degrees around the normal **620** defined by the plane formed by the fiber array. In this example, the surface is rotated clockwise and has an alignment key projecting upwards. Likewise, the ferrule **613** has has a polished surface **614** rotated clockwise with respect to the normal **621** defined by the plane formed by the fiber array terminated in connector **610,** and also includes an alignment key projected upwards. When the connectors **601** and **610** are mated in a Method B Key-Up to Key-Up adapter **620,** polished ferrule surfaces **604** and **614** abut with an angle of about 8 degrees.

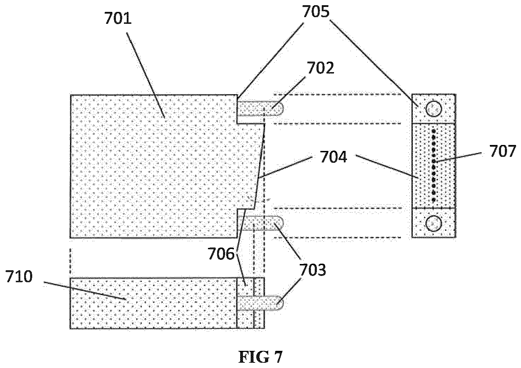

For multi-fiber connectors, it is only necessary to angle polish the ferrule area containing the optical fiber array **707** as illustrated in FIG. 7. In this embodiment, ferrule **701** includes alignment pins **702** and **703,** which are recessed with respect to polished surface **704.**

While particular embodiments and applications of the present invention have been illustrated and described, it is to be understood that the invention is not limited to the precise construction and compositions disclosed herein and that various modifications, changes, and variations may be apparent from the foregoing without departing from the spirit and scope of the invention as described.

## Claims

1. A fiber optic cable assembly, comprising:
a plurality of substantially parallel optical fibers formed into a ribbon, the ribbon extending in a longitudinal direction and having first and second ends;
a termination assembly attached at each of the first and second ends of the ribbon, wherein each of the termination assemblies include a body and a ferrule, the body having a key on an upper surface thereof, and when viewed facing the contact surface with the key projecting upwardly, the outermost one of the fiber positions located on the left side is designated as fiber position 1 and the opposite outermost fiber position is designated position n, and wherein when the contact surface of the first end is viewed with the termination key up, optical fiber 1 is located in position 1, and wherein the contact surface of the second end when viewed with the termination key up, optical fiber 1 is located in position n, and wherein,
the ferrule has a polished contact surface that exposes ends of the optical fibers, and the contact surface forms an oblique angle relative to a plane normal to axes defined by the fibers, and
wherein either (a) each contact surface is slightly rotated clockwise, or (b) each contact surface is slightly rotated counter-clockwise with respect to the normal of the plane defined by the fiber array, so that when the second end of one cable assembly is mated to the first end of a second cable assembly in Key-Up to Key-Up Method B adapter configuration, the angled ferrule surfaces abut.

2. A fiber optical cable assembly as defined in claim 1, wherein the number n of fibers in the ferrule is 4.

3. A fiber optical cable assembly as defined in claim 1, wherein the number n of fibers in the ferrule is 8.

4. A fiber optical cable assembly as defined in claim 1, wherein the number n of fibers in the ferrule is 12.

5. A fiber optical cable assembly as defined in claim 1, wherein the number n of fibers in the ferrule is 16.

6. Wherein the angled surface is between 5 and 15 degrees.

7. The fiber optic cable assembly defined in claim 1, where the oblique angle is about 8 degrees.

8. The fiber optic cable assembly defined in claim 1, wherein the optical fibers are single-mode optical fibers.

9. A fiber optic cable assembly as defined in claim 1, wherein the optical fibers are multimode optical fibers.

10. A fiber optic cable assembly as defined in claim 1, wherein only the portion of the surface area containing the optical fibers is angle polished.

11. A fiber optic cable assembly as defined in claim 1, wherein the ferrule also includes alignment pins.
